# EUROPEAN PATENT SPECIFICATION

(11) **EP 3 185 096 B1**
(45) Date of publication and mention of the grant of the patent: **26.09.2018**
(21) Application number: 16205967.9
(22) Date of filing: 21.12.2016
(51) Int. Cl.: G05D 1/02

(54) **A CHARGING PILE, METHOD AND DEVICE FOR RECOGNIZING THE CHARGING PILE, AND AN AUTONOMOUS CLEANING DEVICE**
LADESÄULE, VERFAHREN UND VORRICHTUNG ZUR ERKENNUNG DER LADESÄULE UND UNABHÄNGIGE REINIGUNGSVORRICHTUNG
PIEU DE CHARGE, PROCÉDÉ ET DISPOSITIF DE RECONNAISSANCE DE PIEU DE CHARGE ET DISPOSITIF DE NETTOYAGE AUTONOME

(30) Priority: 21.12.2015 CN 201510965386
(43) Date of publication of application: 28.06.2017
(73) Proprietor: Xiaomi Inc., Beijing 100085 (CN); Beijing Rockrobo Technology Co. Ltd., Beijing 100192 (CN)
(72) Inventor: Cao, Jingying, Beijing 100085 (CN); He, Hang, Beijing 100085 (CN); Xia, Yongfeng, Beijing 100085 (CN)
(74) Representative: Delumeau, François Guy

(56) References cited:
- WO-A1-2015/090397
- US-A1- 2015 115 876

## Description

### FIELD

The present invention relates to the technical field of autonomous cleaning, and more particularly, to a charging pile, a method and device for recognizing the charging pile, and an autonomous cleaning device.

### BACKGROUND

In relevant technologies, a smart sweeping robot, a smart mopping robot and other kinds of autonomous cleaning devices may perform various types of autonomous cleaning operations, which provide convenience use experience for the user. In order to clean a large area, the autonomous cleaning device is usually equipped with a built-in power supply, which may enable the autonomous cleaning device to be independent from an external power supply and achieve more liberalized clean operations. Correspondingly, before running out of the built-in power supply, the autonomous cleaning device should be able to automatically recognize an external power supply (for example a charging pile) and accurately go to the location of the external power supply and automatically connect to the external power supply, so that the user is completely relieved of monitoring and manually operating the autonomous cleaning device, and that the autonomous cleaning device achieves a truly automatic clean operation.

Nowadays, an autonomous cleaning device with Laser Distance Sensor (LDS) may take a pattern having regular bright and dark changes as a pattern for recognizing the charging pile. However, a recognition result obtained by using the pattern having regular bright and dark changes is usually misjudged, because at home there is often a light source, other than a charging pile, having a pattern similar to the pattern of the charging pile. For example, the LDS of the autonomous cleaning device recognizes the charging pile from identifying alternate brightness and darkness pattern of fight reflected from (or by) an object (i.e. the charging pile). If another object has an alternate bright and dark stripe thereon, or is composed alternately by two materials with different reflection intensities, or is shone by sunshine transmitted through a striped fence, the intensity of light reflected by this object may have an alternate intensity change, which leads to a recognition misjudgment at the LDS of the autonomous cleaning device. The autonomous cleaning device may mistake the charging pile and repeatedly hit with a certain impulsive force a corner on a piece of furniture or a wall using its metallic charging electrode. On one hand, it's harmful to the furniture or wall, on the other hand, the autonomous cleaning device cannot be recharged to continue to work and may stop at an inappropriate place when only part of the room is cleaned until a user finds this situation and brings the autonomous cleaning device to the charging pile, which leads to an inefficient cleaning of the autonomous cleaning device and also a bad user experience.

US 2015/115876 A1 discloses a charging apparatus configured to charge a mobile robot. The mobile robot is configured to emit an optical pattern. The charging apparatus includes a main body configured to perform charging of the mobile robot as the mobile robot docks with the charging apparatus, and two or more position markers located at the main body and spaced apart from each other. The position markers are configured to create indications distinguishable from a surrounding region when the optical pattern is emitted to surfaces of the position markers.

WO 2015/090397 discloses a robotic cleaning device comprising a body, an obstacle detecting device configured to obtain data from a vicinity of the robotic cleaning device. The robotic cleaning device further comprising a propulsion system, a cleaning member, the propulsion system being configured to drive the robotic cleaning device across a surface to be cleaned, wherein a processing unit is arranged to extract at least one feature from said data obtained by the obstacle detecting device, compare the attained feature with stored features and when the attained feature matches one of the stored features, deduce a position of the robotic cleaning device.

### SUMMARY

In view of the fact in related arts, a charging pile, a method and device for recognizing the charging pile, and an autonomous cleaning device are provided by the present invention. The technical solutions are set forth as follows.

According to a first aspect of embodiments of the present invention, a charging pile for an autonomous cleaning device is provided, including: a pile body comprising a power supply interface, wherein the power supply interface is provided on a side surface of the pile body to supply power for the autonomous cleaning device; and an identification structure arranged on the side surface of the pile body to enable a position of the power supply interface to be recognized and determined by a recognition device on the autonomous cleaning device, wherein the identification structure comprises at least one identification element, and each identification element comprises at least one bulge and at least one recess, one of the bulge and the recess has a surface structure having a smaller retroreflection coefficient than a surface structure of the other one of the bulge and the recess, and an intensity of retroreflected light from the surface having the smaller retroreflection coefficient is not smaller than a minimum recognizable light intensity of the recognition device; wherein the identification structure comprises at least one pair of surface structures of an identification element with unmatched specifications, a bulge or a recess of any of the identification elements has a surface structure.

In an embodiment, the surface structure having the smaller retroreflection coefficient has a larger gray value than the surface structure of the other one.

In an embodiment, the surface structure having the smaller retroreflection coefficient employs a first surface structure and the surface structure of the other one employs a second surface structure.

In an embodiment, in an identification element, the retroreflection coefficient of the surface of the bulge is smaller than that of the surface of the recess.

In an embodiment, a difference between preset specification parameters of one pair of surface structures of an identification element with matched specifications is not greater than a recognition error of the recognition device, and a difference between preset specification parameters of one pair of surface structures of an identification element with unmatched specifications is greater than the recognition error of the recognition device.

In an embodiment, a preset specification parameter of each bulge or each recess is not smaller than a minimum recognizable distance of the recognition device.

In an embodiment, a depth difference between the surface of a bulge and the surface of a recess in each identification elements is not smaller than the recognition error of the recognition device.

In an embodiment, a specification of a bottom surface of a recess cooperates with specification of a side wall of the recess so that during recognition of any side surface of the charging pile by the recognition device in a preset angle range, the side wall of the recess shields at most a part of the bottom surface and at least one part of the bottom surface of the recess is in a recognizable state, wherein a preset specification parameter of the at least one part is not smaller than a recognition error of the recognition device and a minimum recognizable distance of the recognition device.

In an embodiment, multiple identification elements and the bulge and the recess of each identification element are arranged in a direction along a preset recognition path of the recognition device, to enable preset specification parameters of respective identification elements to be determined by the recognition device in turn.

According to a second aspect of embodiments of the present invention, a method for recognizing a charging pile is provided, including: acquiring surface characteristics of surrounding objects; and deciding an object to be the charging pile for an autonomous cleaning device when surface characteristics of the object match with a preset identification structure within an allowed error range, wherein the preset identification structure comprises at least one identification element, each identification element comprises at least one bulge and at least one recess, one of the bulge and the recess has a surface structure having a smaller retroreflection coefficient than a surface structure of the other one of the bulge and the recess, and an intensity of retroreflected light from the surface having the smaller retroreflection coefficient is not smaller than a minimum recognizable light intensity of the recognition device, and wherein the identification structure comprises at least one pair of surface structures of an identification element with unmatched specifications, a bulge or a recess of any of the identification elements has a surface structure.

In an embodiment, deciding the object to be the charging pile for an autonomous cleaning device when the surface characteristics of the object match with the preset identification structure within the allowed error range includes: acquiring, respectively, preset specification parameters of a bulge and a recess on the surface of the object; and determining that the object matches with the preset identification structure and deciding the object to be the charging pile for the autonomous cleaning device when the preset specification parameters of the bulge and the recess on the surface of the object respectively match with preset specification parameters of corresponding parts of the preset identification structure; or
acquiring, respectively, retroreflection coefficients of a bulge and a recess on the surface of the object; and determining that the object matches with the preset identification structure and deciding the object to be the charging pile for the autonomous cleaning device when the retroreflection coefficients of the bulge and the recess on the surface of the object respectively match with retroreflection coefficients of corresponding parts of the preset identification structure.

In an embodiment, the method further includes: retrieving a recorded map data when it is determined that there is a need to return to the charging pile; and moving, based on the map data, to an area in a preset distance range from a set position of the charging pile marked in the map data, to recognize the charging pile by acquiring the surface characteristics of the surrounding objects.

In an embodiment, acquiring the surface characteristics of the surrounding objects includes: measuring, by a laser ranging device, distances from surrounding sampling points; and determining the surface characteristics of the surrounding objects based on the measured distance; ors.
measuring, by a laser ranging device, reflected light intensities of surrounding sampling points; and determining the surface characteristics of the surrounding objects based on acquired data of the measured reflected light intensities.

According to a third aspect of embodiments of the present invention, a device for recognizing a charging pile is provided, including: an acquisition unit configured to acquire surface characteristics of surrounding objects; and a decision unit configured to decide an object to be the charging pile for an autonomous cleaning device when surface characteristics of the object match with a preset identification structure within an allowed error range, wherein the preset identification structure comprises at least one identification element, each identification element comprises at least one bulge and at least one recess, one of the bulge and the recess has a surface structure having a smaller retroreflection coefficient than that of a surface structure of the other one of the bulge and the recess, and an intensity of retroreflected light from the surface of the structure having the smaller retroreflection coefficient is not smaller than a minimum recognizable light of a recognition device of the device; the preset identification structure comprises at least one pair of surface structures of an identification element with unmatched specifications, a bulge or a recess of any of the identification elements has a surface structure.

In an embodiment, the decision unit includes: a first acquisition sub-unit configured to acquire, respectively, preset specification parameters of the bulge and the recess on the surface of the object; and a first decision sub-unit configured to determine the object matches with the preset identification structure and decide the object is the charging pile for the autonomous cleaning device when the preset specification parameters of the bulge and the recess on the surface of the object respectively match with preset specification parameters of a corresponding part of the preset identification structure.

In an embodiment, the decision unit includes: a second acquisition sub-unit configured to acquire, respectively, retroreflection coefficients of the bulge and the recess on the surface of the object; and a second decision sub-unit configured to determine the object matches with the preset identification structure and decide the object is the charging pile for the autonomous cleaning device when the retroreflection coefficients of the bulge and the recess on the surface of the object respectively match with preset specification parameters of a corresponding part of the preset identification structure.

In an embodiment, the device further includes: a retrieve unit configured to retrieve a recorded map data when it is determined that there is a need to return to the charging pile; and a movement unit configured to moving, based on the map data, to an area in a preset distance range from a set position of the charging pile marked in the map data, to recognize the charging pile by acquiring the surface characteristics of the surrounding objects.

In an embodiment, the acquisition unit includes: a distance measure sub-unit configured to measure, by a laser ranging device, distance from surrounding sampling points; and a first determination sub-unit configured to determine the surface characteristics of the surrounding objects based on acquired distance data.

In an embodiment, the acquisition unit includes: an intensity measure sub-unit configured to measure, by a laser ranging device, reflected light intensities of the surrounding sampling points; and a second determination sub-unit configured to determine the surface characteristics of the surrounding objects based on acquired data of the reflected light intensities.

According to a fourth aspect of embodiments of the present invention, an autonomous cleaning device used in cooperation with the charging pile according to the invention, including: a processor; and a memory for storing instructions executable by the processor; wherein the processor is configured to: acquire surface characteristics of surrounding objects; decide an object is the charging pile for the autonomous cleaning device when a surface of the object comprises surface characteristics matching with a preset identification structure within an allowed error range, wherein the preset identification structure comprises at least one identification elements, each identification elements comprises at least one bulge and at least one depression, wherein a retroreflection coefficient of a surface of one structure of the bulge and the bulge is less than that of the surface of the other structure, and intensity of retroreflected light formed on the surface of the structure having the less retroreflection coefficient is not less than a minimum recognizable light intensity of the recognition device; the preset identification structure comprises at least one pair of surface structures or identification elements with unmatched specifications, each of the surface structures is the surface structure of the bulge or the bulge of any identification elements.

The advantages and features of the devices according to the embodiments of the present invention are the same with those of the above described method and will not be repeated here.

In a particular embodiment, the steps of the method for recognizing a charging pile are determined by computer program instructions.

Consequently, according to a fifth aspect, the invention is also directed to a computer program for executing the steps of the method for recognizing a charging pile as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the present invention may provide at least some of the following beneficial effects.

As shown in the above embodiments, by configuring an identification structure composed of a bulge-and -recess structure on the pile body of the charging pile, the differentiation degree of the pile body may be improved based on the corresponding special appearance. By configuring a bright and dark feature on the surfaces of the bulge and the recess, the identification structure may be distinguished from the light effects normally generated by objects other than the charging pile in the working environment of the autonomous cleaning device, which enables to avoid charging pile misrecognition at the autonomous cleaning device.

It is to be understood that the above general description and the following detailed description are merely for the purpose of illustration and explanation, and are not intended to limit the scope of the protection of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1-3 is a structural schematic diagram illustrating a robot according to an exemplary embodiment;
Fig. 4 is a structural schematic diagram illustrating a charging pile according to an exemplary embodiment;
Fig. 5 is a schematic diagram illustrating an identification structure on the charging pile according to a first exemplary embodiment;
Fig. 6 is a schematic diagram illustrating an identification structure on the charging pile according to a second exemplary embodiment;
Fig. 7 is a schematic diagram illustrating an identification structure on the charging pile according to a third exemplary embodiment;
Fig. 8 is a schematic diagram illustrating an identification structure on the charging pile according to a fourth exemplary embodiment;
Fig. 9 is a top view diagram illustrating an identification structure on the charging pile according to a fifth exemplary embodiment;
Fig. 10 is a top view schematic diagram illustrating an identification structure on the charging pile according to a sixth exemplary embodiment;
Fig. 11 is a flow diagram illustrating a method for recognizing a charging pile according to an exemplary embodiment;
Fig. 12 is a flow diagram illustrating another method for recognizing a charging pile according to an exemplary embodiment; and
Fig. 13-18 is a block diagram illustrating a device for recognizing a charging pile according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present invention. Instead, they are merely examples of devices and methods consistent with aspects related to the present invention as recited in the appended claims.

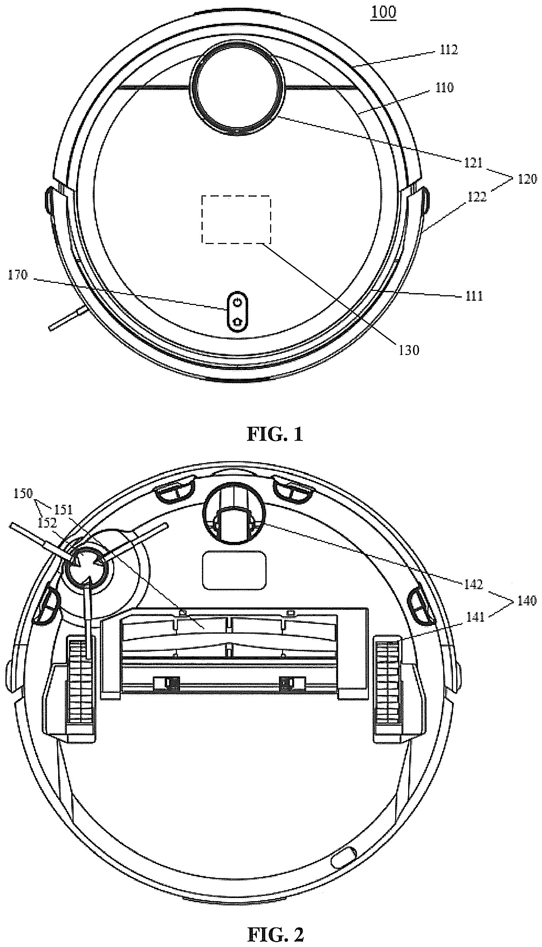

Fig. 1-3 is a structural schematic diagram illustrating a robot according to an exemplary embodiment. As shown in Fig. 1 to 3, the robot 100 may be an autonomous cleaning device, such as a sweeping robot, a mopping robot and the like. The robot 100 may include a robot body 110, a recognition system 120, a control system 130, a drive system 140, a clean system 150, an energy system 160 and a human-machine interactive system 170.

The robot body 110 includes a forward part 111 and a backward part 112, and may be substantially circular (both of the forward part 111 and the backward part 112), and the robot 100 may also have other shapes including, but not limited to, a proximate D-shape (the forward part 111 is square and the backward part 112 is circular).

The recognition system 120 includes a position determination device 121 above the robot body 110, a buffer 122 disposed on the forward part 122 of the robot body 110, a cliff sensor 123 and an ultrasonic sensor (not shown), an infrared sensor (not shown), a magnetometer (not shown), an accelerometer (not shown), a gyroscope (not shown), an odometer (not shown) and the like, to provide various position information and motion state information to the control system 130. The position determination device 121 includes, but not limited to, a camera, a laser ranging device (Laser Distance Sensor LDS). The following paragraphs introduce a Laser Distance Sensor based on a triangulation ranging method is taken as an example to describe how to determine a position. The basic principle of the triangular measurement method is based on the geometric relationship of similar triangles, which will not be explained herein.

The laser ranging device includes a light-emitting unit and a light-receiving unit. The light-emitting unit may include a light source for emitting light, which may include a light-emitting element, such as an infrared LED for emitting infrared ray, a visible light LED for emitting visible light. For example, the light source may be a light-emitting element for emitting laser beams. In the embodiment, a laser diode (LD) is taken as an example of the light source. Specifically, due to the monochromaticity, directiveness, and collimation of the laser beam, the light source emitting the laser beam may make the measurement more accurate when compared with light source emitting other beams. For example, the infrared ray or the visible light emitted by a LED may have a lower accuracy than the laser beam due to the influence of the surrounding environment (the color or the texture of the target). The LD may be a dot laser measuring the two-dimensional position information of obstacles, and also may be a line laser measuring the three-dimensional position information of the obstacles in a certain scope.

The light-receiving unit may include an image sensor which has light spots reflected or scattered by obstacles. The image sensor may be a collection of multiple pixels in a single row or multiple rows. The light-receiving element may convert the optical signals to electrical signals. The image sensor may be a Complementary Metal-Oxide-Semiconductor Transistor (CMOS) sensor or a Charge Coupled Device (CCD) sensor, and the CMOS sensor is preferred due to its low cost. In addition, the light-receiving unit may include an optical lens component. The light reflected or scattered by obstacles may travel to the image sensor to form an image via the optical lens component. The optical lens unit may include one or more lens.

A base may support the light-emitting unit and the light-receiving unit which are arranged on the base and separated by a certain distance. In order to measure obstacles around the robot in 360-degree directions, the base may be rotatably arranged on the robot body, or the base itself doesn't rotate but the emitted light or the received light rotates by arranging a rotate element. The rotate angular velocity of the rotate element may be obtained by arranging an optocoupler element and an encoding disk. The optocoupler element recognizes teeth of the encoding disk and obtains a instantaneous angular velocity by dividing time passing through the spacing between the teeth by the spacing distance between the teeth. The greater the density of the teeth on the encoding disk is, the higher the accuracy and precision of the distance measuring are, but the more complicated the measuring structure is required and the larger the computation amount is required, which may increase the cost. On the contrary, the smaller the density of the teeth on the encoding disk is, the lower the accuracy and precision of the distance measuring are, but the simpler the measuring structure is required and the smaller the computation amount is required, which may reduce the cost.

A data processing device connected with the light-receiving unit, for example, a DSP (Digital Signal Processor) records distance values from obstacles at all angles with respect to the 0-degree direction of the robot, and transmits them to a data processing unit in the control system 130, for example, an application processor including a CPU (Central Processing Unit). The CPU may operate a positioning algorithm based on a particle filter to obtain the current position, and make map for navigation. In one embodiment, the positioning algorithm is simultaneous localization and mapping (SLAM).

Although the laser ranging device based on the triangulation ranging method can measure a distance value at infinity and beyond a certain distance theoretically, in fact, it's hard to achieve a long distance measurement, for example, of more than 6m, due to the limitation of the size of a pixel unit on a sensor of the light-receiving unit and the influences of the photovoltaic conversion speed of the sensor, the data transmission speed between the sensor and the DSP connected with the sensor, and the computation speed of the DSP. Due to the temperature, the laser ranging device may obtain a measured value with an unacceptable error, which is mainly caused by a change between the incident light angle and the emergent light angle caused, in turn, by the distortion of the structure between the light-emitting unit and the light-receiving unit due to the thermal expansion, and the light-emitting unit and the light-receiving unit themselves may have a problem of temperature drift. In addition, After a long time use, the laser ranging device may have a deformation caused by the accumulation of various factors, such as, temperature change, vibration and the like, which may seriously affect the measure result. The accuracy of the measure result will directly decide the accuracy of mapping, which is the basis for the robot to implement a strategy and is especially important.

The forward part 111 of the robot body 110 may bear the buffer 122. When a driving wheel module 141 propels the robot to move on the floor in the cleaning process, the buffer 122 detects one or more events (or objects) in the moving path of the robot via a sensor system, for example, an infrared sensor, and the robot may control the driving wheel module 141 in response to the events (objects) detected by the buffer 122, for example, moving away from obstacles.

The control system 130 is arranged on a circuit board in the robot body 110, and includes a computing processor (e.g., a central processing unit or an application processor) which communicates with a non-transient memory, for example, a hard disk, a flash memory, or a random access memory, and the application processor may make a real-time map of the environment where the robot locates using a positioning algorithm, such as SLAM, based on obstacle information fed back from the laser ranging device. Using the obstacle information as well as distance information and speed information fed back from the buffer 122, the cliff sensor 123 and the ultrasonic sensor, the infrared sensor, the magnetometer, the accelerometer, the gyroscope, and the odometer, the application processor may decide a current working state of the robot, for example, the robot is crossing a threshold, moving to a carpet, arriving near a cliff, getting stuck; the dust box of the robot is full, picked up and the like. The application processor may also give a next action strategy according to different states, such that operations of the robot may be more intelligent and efficient, and bring a better user experience. Furthermore, the control system 130 may plan a most effective and reasonable cleaning path and cleaning mode based on the real-time map made by SLAM, to greatly improve efficiency of cleaning.

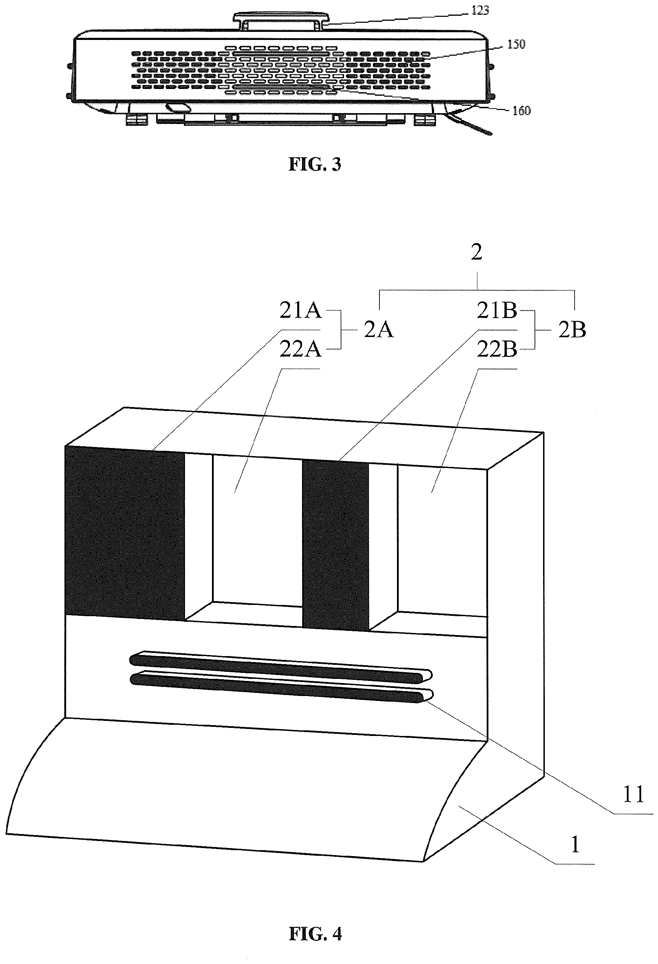

The energy system 160 includes a rechargeable battery on the robot body 110 shown in Fig. 3, and a charging pile outside the robot body 110 which is not shown in the figure. The rechargeable battery may be a nickel-metal hydride battery or a lithium battery and so on. The rechargeable battery may be connected with a charging control circuit, a battery pack charging temperature detection circuit and a low battery voltage monitoring circuit, these circuits being further connected with a microprocessor control circuit. The robot may be charged by connecting a charging electrode on a side or the bottom of the robot body to a charging pile. If an exposed charging electrode has dust thereon, due to a charge accumulation effect during the charging, a plastic part of the robot body around the charging electrode may be melt and deformed, and even the charging electrode itself may be distorted, which leads to a charging failure. In the technical solution of the present invention, the structure of the charging pile has been improved correspondingly to help the charging pile to be better recognized, so as to make the robot 100 more easily recognize and utilize the charging pile. In the following, the structure of a charging pile will be described in detail in conjunction with other figures.

Fig. 4 is a structural schematic diagram illustrating a charging pile according to an exemplary embodiment. As shown in Fig. 4, the charging pile is used to charge an autonomous cleaning device (not shown), for example, a device which may perform autonomous cleaning operations, such as, a sweeping robot, a mopping robot and the like. The charging pile may include: a pile body 1 comprising a power supply interface 11, wherein the power supply interface 11 is provided on a side surface of the pile body 1 to supply power for the autonomous cleaning device; and an identification structure 2 arranged on a side surface of the pile body 1 to enable a position of the power interface 11 to be recognized and determined by a recognition device on the autonomous cleaning device.

As shown in the figure, the identification structure 2 and the power interface 11 are arranged on the same side surface, for example, they are both arranged on the front surface of the pile body 1 shown in Fig. 4, and the identification structure 2 is above the power interface 11. The identification structure 2 and the power interface 11 may have various kinds of positional relationship, for example, the identification structure 2 may be below the power interface 11, or they may arranged in the horizontal direction, which will not be limited herein.

In the technical solution of the present invention, the structure form of the identification structure 2 has been configured reasonably. The identification structure 2 may include at least one identification element, and each identification element comprises at least one bulge and at least one recess, a retroreflection coefficient of the bulge surface is smaller than that of the recess surface, and an intensity of retroreflected light from the bulge is not smaller than a minimum recognizable light intensity of the recognition device described above. The greater a retroreflection coefficient of a surface of an object is, the brighter the surface is detected by the recognition device. Similarly, the smaller the retroreflection coefficient of a surface of an object is, the darker the surface is detected by the recognition device. In one embodiment, the bulge may have a darker surface compared to the recess, and the recess may have a brighter surface compared to the bulge. Correspondingly, as shown in Fig. 4, two identification elements include the identification element 2A and the identification element 2B, and the identification element 2A include a pair of a bulge 21A and a recess 22A, the identification element 2B include a pair of a bulge 21B and a recess 22B. The surfaces of the bulges 21A and 21B are dark surface, and the surfaces of the recesses 22A and 22B are bright surface.

According to the above embodiments, the charging file of the embodiments of the present invention has the following features and corresponding technical effects.
1) A unique appearance of structure. By configuring the pile body 1 of the charging pile with the identification structure 2 having a bulge and recess structure, the differentiation degree of the pile body 1 may be improved based on the unique appearance, which helps the autonomous cleaning device to search and recognize the pile body 1.
2) A unique light effect. By configuring bright and dark features on the surfaces of the bulges 21A and 21B, and the recess 22A and 22B. Specifically, the surfaces of the bulges 21A and 21B are dark surfaces and the surfaces of the recesses 22A and 22B are bright surfaces, the identification structure 2 may be distinguished from light effects generated by objects other than the charging pile (for example, a curtain having an alternately arranged bulge and recess structure and showing a light effect of the bulge surface being bright and the recess surface being dark, which is completely opposite to the light effect of the identification structure 2) in the working environment of the autonomous cleaning device, which helps to avoid misrecognition of the autonomous cleaning device.

### 1. Retroreflection Coefficient Configuration

On one hand, the retroreflection coefficient of an object is related with the surface structure of the object and the material of the object, for example, a micro-spherical or micro-tapered surface structure has a greater retroreflection coefficient. On the other hand, the retroreflection coefficient of an object is related with the gray value (that is, related with the color) of the object, the greater the gray value is, the smaller the retroreflection coefficient is, for example, if a laser beam has a density value of 1, this density value will dramatically decrease even to 0.1 after the laser beam being retroreflected by a black material, for example.

If a requirement that the retroreflection coefficient of the dark surfaces, such as the bulges 21A and 21B, is smaller than that of the bright surfaces, such as the recesses 22A and 22B is met, the retroreflection coefficient of the dark surfaces is ensured to be high enough to enable the recognition device of the autonomous cleaning device to at least recognize the light intensity of the retroreflected light from the dark surfaces. In one embodiment, the difference between the retroreflection coefficient of the bright surface and the retroreflection coefficient of the dark surface should reach a preset difference to enable the recognition device to correctly distinguish the light intensity difference of them.

For example, for a laser light with a light intensity value of 1, it should be ensured that the intensity of the light retroreflected from (or by) the dark surface is 0.3, and the intensity of the light retroreflected from the bright surface is 0.6. With respect to the charging pile in the embodiment shown in Fig. 4, the recognition device may recognize that a surface having a light intensity value of 0.3 and having a certain width and depth, and a surface having a light intensity of 0.6 and having a certain width and depth alternately appear. It should at least be ensured that the intensity of the retroreflected light from the dark surface is not smaller than 0.05, otherwise the recognition device may not be able to recognize and determine if there is a structure surface with a certain width and depth at the corresponding location, and cannot detect the depth difference of the bulge surface and the recess surface.

The bright surface may employ various reflective films which has a certain retroreflection coefficient. For example, the project grade 3200 series from the 3M Company may be employed; similarly, the project grade 3400 series, the super intensity grade 3930 series, and the soft grade 610SG series and the like may also be employed.

The dark surface may employ a material with a small retroreflection coefficient. In one embodiment, dark-colored foam cotton, a dark-colored printing material, a dark-colored sandblasting material, or an injection molding material having a surface with special lines and the like may be selected, wherein, the injection molding material having a surface with special lines may be the injection molding material with irregularly shallow etched lines. When the dark surface is selected, black foam cotton may be improper due to its smaller retroreflection coefficient, the recognized result is same with the result of the case that there is no dark surface or the recognition surface is at infinity, so it's hard to determine the distance of the dark surface.

The following aspects should be noted.
(1) In the above embodiments, the "dark" surface and the "bright" surface, the "high" gray value and the "low" gray value reflect a relative relationship between a bulge and a recess of a same identification element, but are not absolute values. For example, when the retroreflection coefficient of the surface of the bulge 21A is smaller than that of the surface of the recess 22A, the recognition device on the autonomous cleaning device may decide that the bulge 21A has a relatively dark surface and the recess 22A has a relatively bright surface. When the retroreflection coefficient of the surface of the bulge 21B is smaller than that of the surface of the recess 22B, the recognition device may decide that the bulge 21B has a relatively dark surface and the recess 22B has a relatively bright surface, even if the retroreflection coefficient of the surface of the bulge 21B may be greater than that of the surface of the bulge 21A or recess 22A.
(2) When the comparison of two objects are involved, for example, when the retroreflection coefficients of the bulge 21A and the recess 22A are compared, it should be ensured that a difference between the intensities of the retroreflected light from the bulge 21A and from the recess 22A is greater than a recognition error of the recognition device, so as to ensure that a difference of their retroreflection coefficients is recognizable by the recognition device.
(3) Those skilled in the art should understand that, the bulges of each identification element having a dark surface and the recesses of each identification element having a bright surface may be achieved in other ways, which is not limited herein.

### 2. Identification Element

### 1) the Number of Bulge and Recess

In the embodiment shown in Fig. 4, the identification element 2A and the identification element 2B respectively include only one bulge and one recess. However, those skilled in the art should understand that this is merely for illustrative. In fact, each identification element may include one or more bulges and one or more recesses, the numbers of the bulges and recesses included in each identification element are not limited in the present invention.

### 2) Specification Match

### (1) the Way To Judge

With respect to a pair of bulges and recesses in each identification element, a specification relationship for the pair of bulges and recesses may include: the specifications of the bulge and the recess are matched, or the specifications of the bulge and the recess are unmatched, wherein, the judgment of the "matched" and the "unmatched" may include the flowing ways.

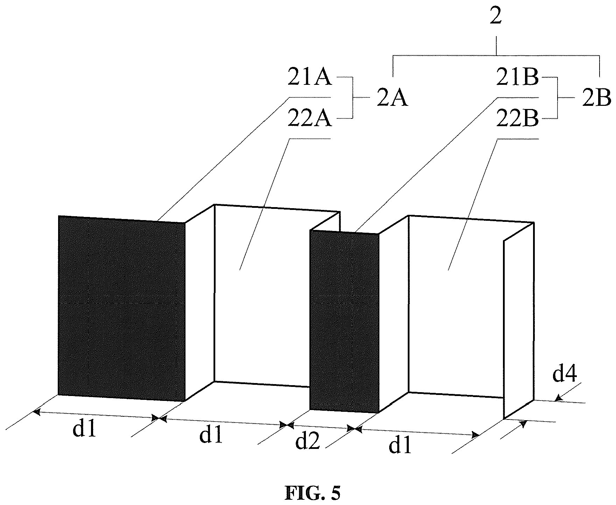

As shown in Fig. 5, with respect to the bulge 21A and recess 22A in the identification element 2A, the bulge 21A and the recess 22A both have a specification parameter d1 in the horizontal direction, that is, the bulge 21A and the recess 22A has a same specification parameter in the horizontal direction (the horizontal direction is taken as an example for illustration herein), and the bulge 21A and the recess 22A of the identification element 2A may be considered as being matched.

Similarly, As shown in Fig. 5, with respect to the bulge 21B and recess 22B in the identification element 2B, the bulge 21B and the recess 22B have respective specification parameters d2 and d1 in the horizontal direction, that is, the bulge 21B and the recess 22B has different specification parameters in the horizontal direction (the horizontal direction is taken as an example for illustration herein), and the bulge 21B and the recess 22B of the identification element 2B may be considered as being unmatched.

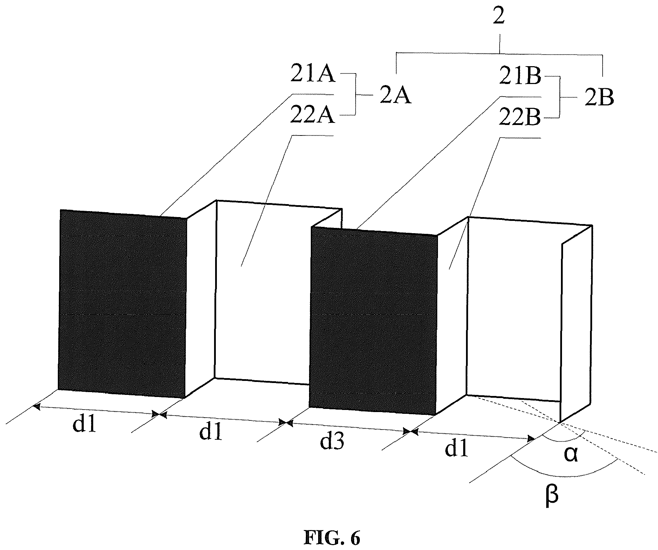

The recognition device of the autonomous cleaning device may have some recognition error (e.g. an intrinsic error), and the recognition error may be taken into account according to a more accurate recognition requirement. For example, as shown in Fig. 6, although the bulge 21B and the recess 22B of the identification element 2B have respective specification parameters d3 and d1, d3 being not equal to d1, the recognition device cannot distinguish d3 from d1 due to the recognition error and may believe that the corresponding bulge 21B and recess 22B are matched.

It should be understood that if the difference between preset specification parameters of the bulge and the recess of one identification element is not greater than a recognition error of the recognition device, that is, if their preset specification parameters appear the same to the recognition device, the recognition device may believe that the bulge and the recess of the identification element are matched; if not, the recognition device believe that they're unmatched.

In addition to the "same specification" used as the judgment condition in the embodiment, other embodiments may use more judgment conditions, for example, it can be decided that the bulge and the recess are matched if the difference between the specification parameters of the bulge and the recess is not greater than a preset value.

### (2) Structure Form

Based on the judgment process for "matched" in the above embodiment, when the identification structure 2 on the charging pile includes multiple identification elements, a part of the multiple identification elements are configured to have matched bulges and recesses, and the other part are configured to have unmatched bulges and recessed.

For example, in the embodiment shown in Fig. 5, the bulge 21A and the recess 22A of the identification element 2A are matched, and the bulge 21B and the recess 22B of the identification element 2B are unmatched. In the embodiment shown Fig. 6, the bulge 21A and the recess 22A of the identification element 2A are matched, and the bulge 21B and the recess 22B of the identification element 2B are also matched, so they cannot constitute the identification structure 2 in an embodiment of the present invention.

### (3) Specification Configuration

With the consideration of the recognition error of the recognition device, for example, for the identification element 2B shown in Fig. 5-6, the preset specification parameter of the bulge 21B, and the preset specification parameter of the recess 22B, and the depth difference d4 (Fig.5) between the surface of the bulge 21B and the surface of the recess 22B should be properly configured, so as to avoid the misrecognition of the recognition device.

On one hand, the preset specification parameter of the bulge 21B, and the preset specification parameter of the recess 22B, and the depth difference d4 should not be too small. In one embodiment, the recognition device emits detection light (such as laser) around in a range of 360-degree, so as to detect distances from objects around it. The recognition device rotates and emits light to objects around it in a range of 360-degree, and it has a preset rotating angle unit, for example, 0.5-degree, which forms a light emitting spacing after the light being emitted to the objects. Therefore, the preset specification parameter of the bulge 21B and the preset specification parameter of the recess 22B should not be smaller than the light emitting spacing, to avoid the bulge 21B and the recess 22B being not able to be detected. When the light emitting spacing and the recognition error described above are taken into account, the total of the preset specification parameter of the bulge 21B and the preset specification parameter of the recess 22B may further be: not smaller than twice of the light emitting spacing plus twice of the recognition error (e.g. a tolerated intrinsic error) of the recognition device. Similarly, in order to accurately recognize and distinguish the bulges and recesses of each identification element, the depth difference d4 should not be smaller than the recognition error of the recognition device for the distance measurement, so as to enable the recognition device to accurately recognize the bulge 22B and distinguish the bulge 22B from the recess 21B. For example, the depth difference d4 may further be not smaller than twice of the recognition error.

On the other hand, the depth value d4 should not be too big. As shown in Fig. 6, if the autonomous cleaning device is required to achieve the automatic recognition of the charging pile in a largest angle α, at least a part of the bottom surface of the recess 22B should be able to reflect the light received from the recognition device of the autonomous cleaning device to the recognition device when the light has the angle α with respect to the pile body 1, such that the recognition device is able to detect and recognize the corresponding part of the bottom surface of the recess 22B, and complete the recognition of the recess 22B. Therefore, in each identification element, the specification of the bottom surface of the recess 22B should be matched with the specification of the side wall of the recess 22B, so as to enable the side wall of the recess shields at most a part of the bottom surface when the recognition device recognizes any side surface of the charging pile in a preset angle range (e.g., the angle α or other angles less than α, such as the angle β shown in Fig. 6), such that at least a part of the bottom surface of the recess is in a recognizable state (i.e., the part can reflect the light to the recognition device for recognition), and the preset specification parameter of the part is not smaller than the recognition error of the recognition device and the minimum recognizable distance of the recognition device.

With respect to the identification structure 2 shown in Fig. 5, in an exemplary embodiment, the size d1 of the bulge 21A, the recess 22A, and the recess 22B may be 6cm, and the size d2 of the bulge 21B may be 3cm, and the depth may be 1.6cm. In another exemplary embodiment, the sizes of the bulge 21A and the recess 22A of the identification element 2A shown in Fig. 5 may be different, for example, the size of the bulge 21A may be 5cm and the size of the recess 22A may be 6cm, the size of the bulge 21B may be 3.5cm and the size of the recess 22B may be 6cm, and the depth may be 1.8cm.

### Arrangement Direction

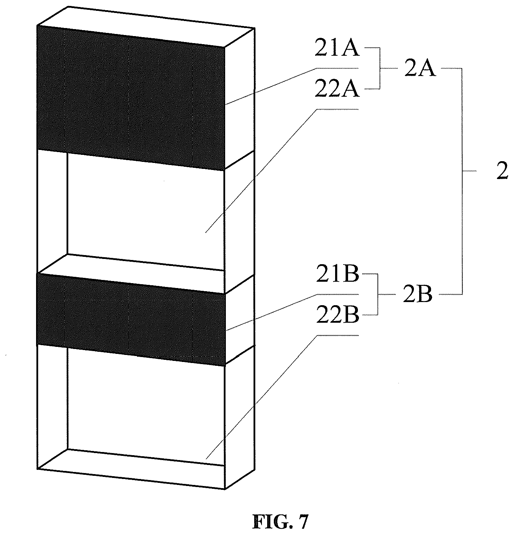

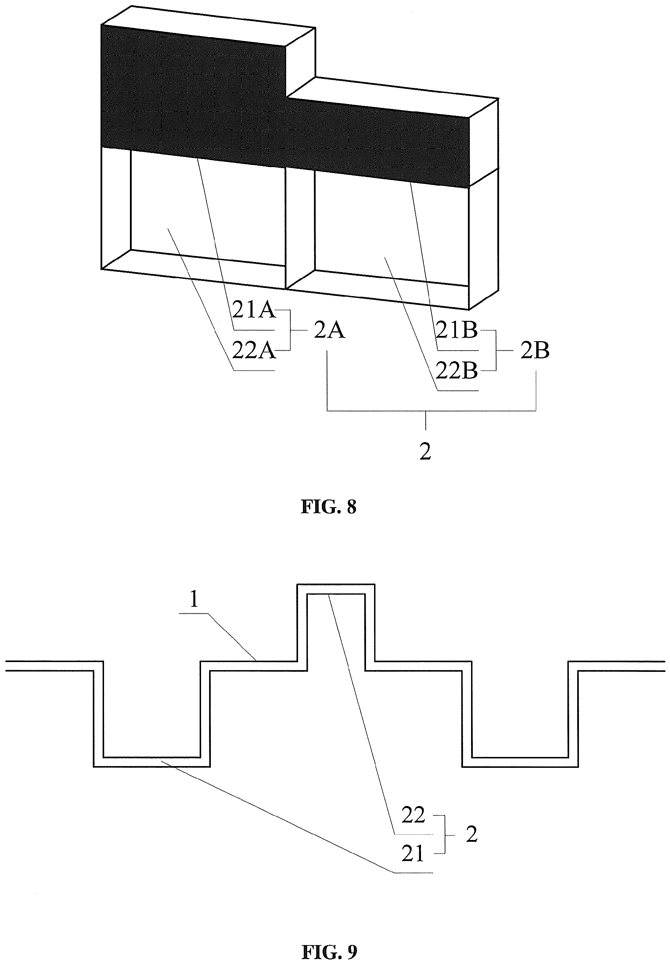

Although in the embodiments shown in Fig. 4-6, the identification element 2A and the identification element 2B and the bulge and the recess of each identification element (for example, the bulge 21A and the recess 22A, the bulge 21B and the recess 22B) are arranged in the horizontal direction, but the direction is not limited by the present invention and any arrangement may be used as needed. For example, as shown in Fig. 7, the identification element 2A and the identification element 2B and the bulge and the recess of each identification element may be arranged in the vertical direction; or as shown in Fig. 8, the identification element 2A and the identification element 2B may be arranged in the horizontal direction, and the bulge 21A and the recess 22A, the bulge 21B and the recesses 22B may be arranged in the vertical direction.

In one embodiment, multiple identification elements and the bulge and the recess of each identification element are arranged in a direction along a preset recognition path of the recognition device, to enable preset specification parameters of respective identification elements to be determined by the recognition device in turn (or successively). For example, in the embodiment shown in Fig. 5, if the recognition device of the autonomous cleaning device employs a preset recognition path along the horizontal direction (e.g., the recognition is performed from left to right in the horizontal direction), the identification element 2A and the identification element 2B, the bulge 21A and the recess 22A, and the bulge 21B and the recess 22B may be arranged in the horizontal direction, so as to enable the bulge 21A, the recess 22A and the identification element 2A composed of the bulge 21A and the recess 22A, and the bulge 21B, the recess 22B and the identification element 2B composed of the bulge 21B and the recess 22B to be recognized by the recognition device in turn (or successively).

### 4) Structure Form

In the above-described embodiments, the bulge and the recess of each identification element are adjacently arranged and have a structure with a rectangle cross-section. In fact, the identification structure 2 is only required to have the features of "bulge and recess structure" and "bright and dark surface", a specific form of the structure is not limited in the present invention.

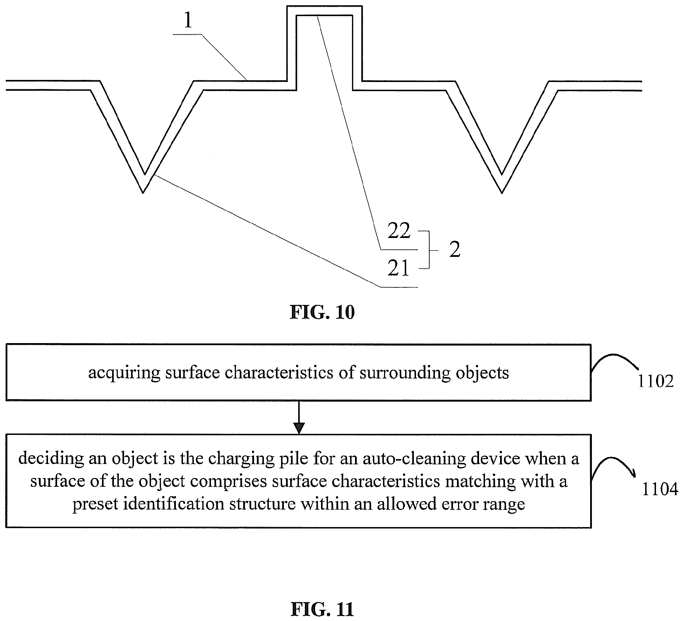

In one embodiment, as shown in Fig. 9, the bulge 21 and the recess 22 on one identification element of the identification structure 2 have a rectangle cross-section, and the bulge 21and the recess 22 are not adjacently arranged, for example, they are separated by a preset distance. In another embodiment, as shown in Fig. 10, the bulge 21 on one identification element of the identification structure 2 may be configured with a triangular prism structure (whose cross-section is triangle), and the recess 22 has a rectangle cross-section, and the bulge 21 and the recess 22 may be not adjacently arranged.

Based on the charging pile structure described above, the present invention provides a recognition method applied to the charging pile of an autonomous cleaning device, which will be described in detail in the following.

Fig. 11 is a flow diagram illustrating a method for recognizing a charging pile according to an exemplary embodiment. As shown in Fig. 11, the method may be implemented by an autonomous cleaning device and comprise the following steps.

At step 1102, surface characteristics of the surrounding objects are acquired.

At step 1104, an object (of the surrounding objects) is decided to be the charging pile for the autonomous cleaning device when the surface characteristic of the object matching with a preset identification structure within an allowed error range, wherein the preset identification structure comprises at least one identification element, each identification element comprises at least one bulge and at least one recess, a retroreflection coefficient of the bulge is smaller than a retroreflection coefficient of the recess, and an intensity of retroreflected light from the bulge is not smaller than a minimum recognizable light intensity of a recognition device of the autonomous cleaning device; and when the preset identification structure comprises multiple identification elements, one or more of the multiple identification elements are configured to have matched bulges and recesses, and the others are configured to have unmatched bulges and recessed.

In an embodiment, the surface characteristic may include multiple predefined feature type. For example, in one embodiment, the surface characteristic may be a preset specification parameter, such as a vertical height, a horizontal width, a depth and the like, the autonomous cleaning device may acquire the preset specification parameters of every bulge and every recess on the surface of one object respectively. When the preset specification parameters of every bulge and every recess on the surface of the object are matched with the preset specification parameters of the corresponding parts in the preset identification structure, the object is determined to match with the preset identification structure and is decided to be the charging pile for the autonomous cleaning device. For example, it is supposed that the charging pile has a bulge and a recess which are adjacently arranged, and the horizontal width of the bulge is 6cm and the horizontal width of the recess is 3cm. The autonomous cleaning device may measure distances, by the laser ranging device of the autonomous cleaning device, from sample points formed on the surrounding objects, to obtain the bulge and recess features and the horizontal widths of the corresponding objects. When an object includes a bulge with a horizontal width of 6cm and a recess with a horizontal width of 3cm, the object may be determined to be the charging pile.

In another embodiment, the surface characteristic may be a retroreflection coefficient. The autonomous cleaning device may acquire, respectively, retroreflection coefficients of every bulge and every recess on the surfaces of the objects; and when retroreflection coefficients of a bulge and a recess on the surface of an object respectively match with retroreflection coefficients of corresponding parts of the preset identification structure, the object is determined to match with the preset identification structure and the object is decided to be the charging pile for the autonomous cleaning device. For example, it is supposed that the charging pile includes a bulge and a recess which are adjacently arranged, and a retroreflection coefficient on the surface of the bulge may make a laser with an intensity of 1 have a reflected light intensity of 0.3, and a retroreflection coefficient on the surface of the recess may make the laser with the intensity of 1 have a reflected light intensity of 0.6. The autonomous cleaning device may emit a laser beam, whose intensity is 1, to the surrounding objects and receive the corresponding reflected light. The autonomous cleaning device may decide that an object is the charging pile if an object includes a bulge with a reflected light intensity of 0.3 and a recess with a reflected light intensity of 0.6.

The preset specification parameters and the retroreflection coefficients may be used as the surface characteristics at the same time, which will not be repeated herein.

On one hand, by configuring an identification structure composed of a bulge-and-recess structure on the pile body of the charging pile, the differentiation degree of the pile body may be improved based on the corresponding special appearance. On the other hand, by configuring a bright and dark feature on the surfaces of the bulge and the recess, the identification structure may be distinguished from light effects normally generated by objects other than the charging pile in the working environment, which helps to avoid misrecognition of the autonomous cleaning device.

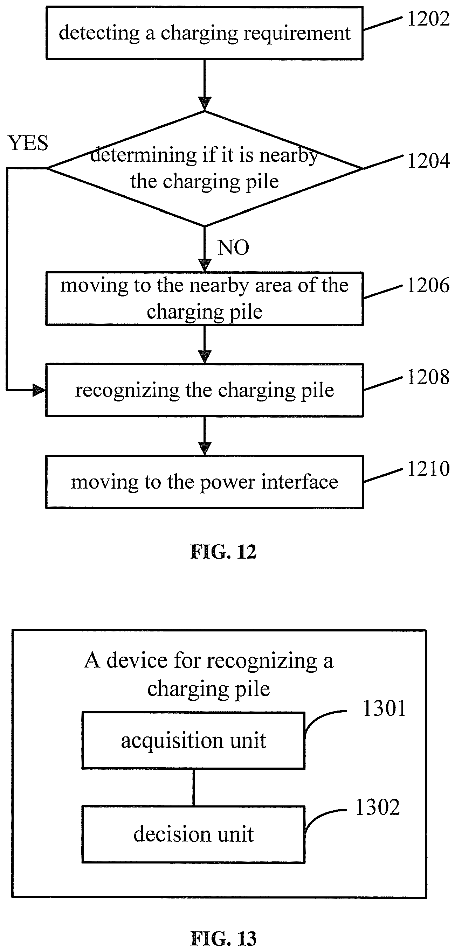

Fig. 12 is a flow diagram illustrating another method for recognizing a charging pile according to an exemplary embodiment. The method may include the following steps when implemented by a sweeping robot.

At step 1202, the sweeping robot detects a charging requirement.

In the embodiment, the sweeping robot detects that there is a charging requirement in various situations based on a preset processing logic. For example, in one situation, it detects that there is a demand for charging when the electric quantity of the portable power source of the sweeping robot is lower than a preset electric quantity threshold. In another situation, it decides there is a demand for charging when the sweeping robot completes a cleaning task.

At step 1204, the sweeping robot determines if it is nearby the charging pile, if not, turn to step 1210, or turn to step 1206.

In the embodiment, the sweeping robot may retrieve a previously generated and stored map or generate in real time the map of the working area where it is located, so as to obtain the distance between itself and the charging pile marked in the map. The robot may decide that it is nearby the charging pile if the distance is smaller or equal to a preset distance, or the robot decides that it is far away from the charging pile.

At step 1206, the robot moves to a nearby area of the charging pile.

In the embodiment, based on a historically generated or real-time generated map, the sweeping robot may move to a nearby position of the charging pile marked on the map, wherein, the "nearby" may be understood as having a distance from the charging pile marked on the map less than a preset distance.

It should be noted that the sweeping robot may obtain the map of the area where it is located in many ways. In one embodiment, the sweeping robot is configured with a LDS device and related functional components. The LDS device may recognize the objects around the sweeping robot by obtaining the distances from the nearby objects, and generate the corresponding map in combination with a distance from each object. In another embodiment, the sweeping robot is configured with image acquisition and process components, such as a camera and a processor. The sweeping robot performs image acquisition around it by the camera, and performs object recognition and processing the acquired images by the processor, so as to learn the objects around it and the corresponding distances to generate the corresponding map. The sweeping robot can also generate the map in other ways, which is not limited herein.

At step 1208, the sweeping robot recognizes the charging pile.

In the embodiment, due to the limitations of the size, and processing capacity of the sweeping robot and other limitations, the accurate recognition distance for the charging pile has a certain limit, for example, the sweeping robot can complete scanning and recognition for the details of the charging pile when the distance between the sweeping robot and the charging pile is in the range of 60-80 cm, but the scanning and recognition ability for details will reduce if the distance is longer. Therefore, by moving to the area nearby the charging pile in advance based on the map, the sweeping robot can actively move to the area in which the details of the charging pile can be scanned and recognized without improving the ability for recognizing the charging pile, so as to enable the sweeping robot to exactly recognize the charging pile.

If the location of the charging pile is changed and the actual location is different from the marked location in the map, the sweeping robot cannot find the charging pile in the distance range of 60-80cm from the original location of the charging pile, the sweeping robot may search for the charging pile around the original location, for example, take the original location as a center and draw a circle with a certain radius, and then move along the circle path and search for the charging pile.

In the embodiment, the charging pile is configured with the identification structure 2 in the embodiments shown in Fig. 4-10, and is recognized using the recognition method shown in Fig. 11, which will not be repeated herein.

At step 1210, the sweeping robot moves to the power interface.

In the embodiment, the sweeping robot may move to the power interface in the following way and finish the connection with the power interface.

When the sweeping robot and the charging pile is close enough, the sweeping robot may turn its body for 180-degree, and then swing in a small angle while slowing moving backward until the voltage of the charging electrode on the sweeping robot has a voltage increases to a predetermined vale and be stable in the process of berth, which indicates that it already berthed at the charging pile and achieved the connection with the power interface.

In the process of charging, it indicates the sweeping robot separates from the charging pile due to external factors if the voltage suddenly drops to 0, then the sweeping robot should move forward a certain distance and turn its body for 180-degree to re-perform the action of searching the charging pile. In the charging pile, if the voltage reduces to 0 in a certain rate, it indicates a power failure or the power line being disconnected. Because the inductor and the capacitor of adapter have stored a certain amount of energy and they will release the energy during power failure, the voltage between the two ends of the charging electrode doesn't suddenly drop to 0 but with a certain rate. In this case, the sweeping robot is just required to stay in the same position.

Corresponding to the method for recognizing a charging pile described above, the present invention also provides a device for recognizing a charging pile in an embodiment.

Fig.13 is a block diagram illustrating a device for recognizing a charging pile according to an exemplary embodiment. As shown in Fig. 13, the device includes an acquisition unit 1301 and a decision unit 1302.

The acquisition unit 1301 is configured to acquire surface characteristics of surrounding objects; and

The decision unit 1302 is configured to decide an object to be the charging pile for an autonomous cleaning device when surface characteristics of the object match with a preset identification structure within an allowed error range, wherein the preset identification structure comprises at least one identification elements each identification element comprises at least one bulge and at least one recess, one of the bulge and the recess has a surface structure having a retroreflection coefficient than that of a surface structure of the other one of the bulge and the recess, and an intensity of retroreflected light from the surface structure having the smaller retroreflection coefficient is not smaller than a minimum recognizable light of a recognition device of the device; the preset identification structure comprises at least one pair of surface structures of an identification element with unmatched specifications, a bulge or a recess of any of the identification elements has a surface structure.

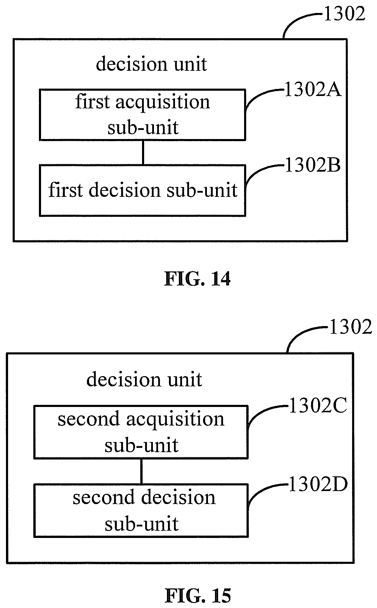

Fig.14 is a block diagram illustrating another device for recognizing a charging pile according to an exemplary embodiment. As shown in Fig. 14, this embodiment is based on the embodiment shown in Fig. 13. The decision unit 1302 includes a first acquisition sub-unit 1302A and a first decision sub-unit 1302B.

The first acquisition sub-unit 1302A is configured to acquire, respectively, preset specification parameters of the bulge and the recess on the surface of the object.

The first decision sub-unit 1302B is configured to determine the object matches with the preset identification structure and decide the object is the charging pile for the autonomous cleaning device when the preset specification parameters of the bulge and the recess on the surface of the object respectively match with preset specification parameters of a corresponding part of the preset identification structure.

Fig. 15 is a block diagram illustrating another device for recognizing a charging pile according to an exemplary embodiment. As shown in Fig. 15, this embodiment is based on the embodiment shown in Fig. 13. The decision unit 1302 includes a second acquisition sub-unit 1302C and a second decision sub-unit 1302D.

The second acquisition sub-unit 1302C is configured to acquire, respectively, retroreflection coefficients of the bulge and the recess on the surface of the object.

The second decision sub-unit 1302D is configured to determine the object matches with the preset identification structure and decide the object is the charging pile for the autonomous cleaning device when the retroreflection coefficients of the bulge and the recess on the surface of the object respectively match with preset specification parameters of a corresponding part of the preset identification structure.

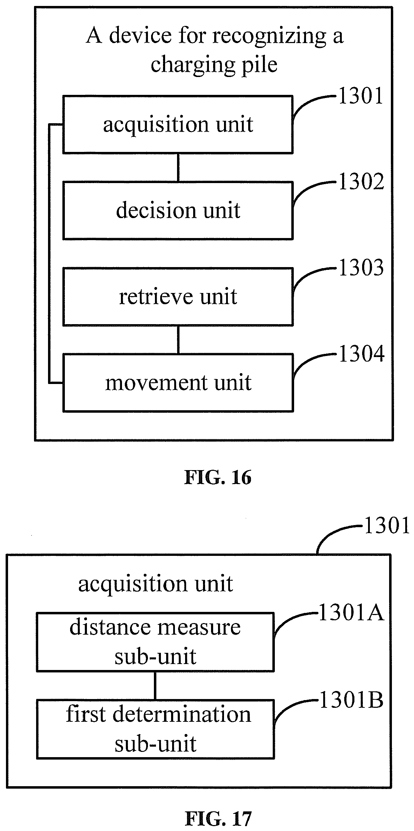

Fig. 16 is a block diagram illustrating another device for recognizing a charging pile according to an exemplary embodiment. As shown in Fig. 16, this embodiment is based on the embodiment shown in Fig. 13. The device may further include a retrieve unit 1303 and a movement unit 1304.

The retrieve unit 1303 is configured to retrieve a recorded map data when it is determined that there is a need to return to the charging pile.

The movement unit 1304 is configured to moving, based on the map data, to an area in a preset distance range from a set position of the charging pile marked in the map data, to recognize the charging pile by acquiring the surface characteristics of the surrounding objects.

Fig. 17 is a block diagram illustrating another device for recognizing a charging pile according to an exemplary embodiment. As shown in Fig. 17, this embodiment is based on the embodiment shown in Fig. 13. The acquisition unit 1301 may include: a distance measure sub-unit 1301A and a first determination sub-unit 1301B.

The distance measure sub-unit 1301A is configured to measure, by a laser ranging device, distance from surrounding sampling points.

The first determination sub-unit 1301B is configured to determine the surface characteristics of the surrounding objects based on acquired distance data.

It should be noted that the structures of the measure sub-module 1301A and the determination sub-module 1301B in the device embodiment shown in Fig. 17 may also be included in the device embodiments shown in Fig. 14-16, which is not limited herein.

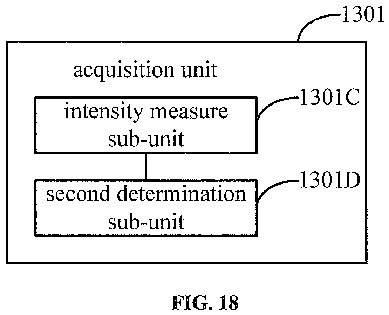

Fig. 18 is a block diagram illustrating another device for recognizing a charging pile according to an exemplary embodiment. As shown in Fig. 18, this embodiment is based on the embodiment shown in Fig. 13. The acquisition unit 1301 may include: an intensity measure sub-unit 1301C and a second determination sub-unit 1301D.

The intensity measure sub-unit 1301C is configured to measure, by a laser ranging device (LDS), reflected light intensities of the surrounding sampling points.

The second determination sub-unit 1301D is configured to determine the surface characteristics of the surrounding objects based on acquired data of the reflected light intensities.

It should be noted that the structures of the intensity measure sub-unit 1301C and a second determination sub-unit 1301D in the device embodiment shown in Fig. 18 may also be included in the device embodiments shown in Fig. 14-16, which is not limited herein.

The operations performed by each unit of the devices described in the above embodiments have already been described in details in the related method embodiments, which will not be repeated herein.

With respect to the device embodiments, they basically correspond to the method embodiments, so the related parts just refer to the description for the parts in the method embodiments. All the device embodiments described above are merely illustrative. The units described as a separate element may be or may not be physically separated, and the components described as an unit may be or may not be a physical unit, that is, they may be located in one place or be distributed to multiple network element. Part or all of the modules may be selected as needed to achieve the purpose of the present invention. Those skilled in the art may understand and practice the present invention without any creative work.

Correspondingly, a device for recognizing a charging pile is also provided by the present invention, comprises: a processor; and a memory for storing instructions executable by the processor; wherein the processor is configured to: acquire surface characteristics of surrounding objects; decide an object is the charging pile for the autonomous cleaning device when a surface of the object comprises surface characteristics matching with a preset identification structure within an allowed error range, wherein the preset identification structure comprises at least one identification element, each identification element comprises at least one bulge and at least one depression, wherein a retroreflection coefficient of a surface of one structure of the bulge and the bulge is less than that of the surface of the other structure, and intensity of retroreflected light formed on the surface of the structure having the less retroreflection coefficient is not less than a minimum recognizable light intensity of the recognition device; the preset identification structure comprises at least one pair of surface structures or identification elements with unmatched specifications, each of the surface structures is the surface structure of the bulge or the bulge of any identification elements.

Correspondingly, an autonomous cleaning device is also provided by the present invention and comprises a memory and one or more programs which are stored in the memory. One or more processors are configured to implement the one or more programs including codes for performing the following operations: acquiring surface characteristics of surrounding objects; and deciding an object is the charging pile for an autonomous cleaning device when a surface of the object comprises surface characteristics matching with a preset identification structure within an allowed error range, wherein the preset identification structure comprises at least one identification element, each identification element comprises at least one bulge and at least one recess, one of the bulge and the recess has a structure with a surface having a smaller retroreflection coefficient than a surface of another structural of the other one of the bulge and the recess, and intensity of retroreflected light from a surface having the smaller retroreflection coefficient is not smaller than a minimum recognizable light intensity of the recognition device, and wherein the identification structure comprises at least one pair of surface structures or identification elements with unmatched specifications, each of the surface structures is a surface structure of the bulge or the recess of any identification element.

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art.

## Claims

1. A charging pile for an autonomous cleaning device, comprising:
a pile body (1) comprising a power supply interface (11), wherein the power supply interface (11) is provided on a side surface of the pile body (1) to supply power for the autonomous cleaning device;
an identification structure (2) arranged on the side surface of the pile body (1) to enable a position of the power supply interface (11) to be recognized and determined by a recognition device on the autonomous cleaning device, wherein the identification structure (2) comprises at least one identification element (2A, 2B), and each identification element (2A) comprises at least one bulge (21A) and at least one recess (22A), one (21A) of the bulge (21A) and the recess (22A) has a surface structure having a smaller retroreflection coefficient than a surface structure of the other one (22A) of the bulge (21A) and the recess (22A), and an intensity of retroreflected light from the surface structure (21A) having the smaller retroreflection coefficient is not smaller than a minimum recognizable light intensity of the recognition device;
wherein the identification structure (2) comprises at least one pair of surface structures of an identification element (2B) with unmatched specifications (21B, 22B), a bulge (21A, 21B) or a recess (22A, 22B) of the identification element (2A, 2B) has a surface structure,
**characterised in that** in an identification element (2A), the retroreflection coefficient of the surface of the bulge (21A) is smaller than that of the surface of the recess (22A).

2. The charging pile of claim 1, wherein the surface structure of the bulge (21A) has a larger gray value than the surface structure of the recess (22A).

3. The charging pile of claim 1, wherein a difference between preset specification parameters of one pair of surface structures (21A, 22A) of an identification element (2A) with matched specifications is not greater than a recognition error of the recognition device, and wherein
a difference between preset specification parameters of one pair of surface structures (21B, 22B) of an identification element (2B) with unmatched specifications is greater than the recognition error of the recognition device.

4. The charging pile of claim 1, wherein a preset specification parameter of each bulge (21A, 21B) or each recess (22A, 22B) is not smaller than a minimum recognizable distance of the recognition device.

5. The charging pile of claim 1, wherein a depth difference (d4) between the surface of a bulge (21B) and the surface of a recess (22B) in each identification element (2B) is not smaller than a recognition error of the recognition device.

6. The charging pile of claim 1, wherein a specification of a bottom surface of a recess (22B) cooperates with a specification of a side wall of the recess (22B) so that during recognition of any side surface of the charging pile by the recognition device in a preset angle range (α), the side wall of the recess (22B) shields at most a part of the bottom surface and at least one part of the bottom surface of the recess (22B) is in a recognizable state, wherein a preset specification parameter of the at least one part is not smaller than a recognition error of the recognition device and a minimum recognizable distance of the recognition device.

7. The charging pile of claim 1, wherein multiple identification elements (2A, 2B) and the bulge (21A, 21B) and the recess (22A, 22B) of each identification element are arranged in a direction along a preset recognition path of the recognition device, to enable preset specification parameters of respective identification elements to be recognized by the recognition device in turn.

8. A method for recognizing a charging pile, comprising:
acquiring (1102) surface characteristics of surrounding objects;
deciding (1104) an object to be the charging pile for an autonomous cleaning device when surface characteristics of the object match with a preset identification structure within an allowed error range, wherein the preset identification structure comprises at least one identification element, each identification element comprises at least one bulge and at least one recess, one of the bulge and the recess has a surface structure having a smaller retroreflection coefficient than a surface structure of the other one of the bulge and the recess, and an intensity of retroreflected light from the surface structure having the smaller retroreflection coefficient is not smaller than a minimum recognizable light intensity of the recognition device, and wherein the preset identification structure comprises at least one pair of surface structures of an identification element with unmatched specifications, a bulge or a recess of the identification element has a surface structure,
**characterised in that** in an identification element (2A), the retroreflection coefficient of the surface of the bulge (21A) is smaller than that of the surface of the recess (22A).

9. The method of claim 8, wherein deciding (1104) the object to be the charging pile for an autonomous cleaning device when surface characteristics of the object match with the preset identification structure within the allowed error range comprises:
identifying, respectively, preset specification parameters of a bulge (21A, 21B) and a recess (22A, 22B) on the surface of the object; and determining that the object matches with the preset identification structure and deciding the object to be the charging pile for the autonomous cleaning device when the preset specification parameters of the bulge (21A, 21B) and the recess (22A, 22B) on the surface of the object respectively match with preset specification parameters of corresponding parts of the preset identification structure; or
identifying, respectively, retroreflection coefficients of a bulge (21A, 21B) and a recess (22A, 22B) on the surface of the object; and determining that the object matches with the preset identification structure and deciding the object to be the charging pile for the autonomous cleaning device when the retroreflection coefficients of the bulge (21A, 21B) and the recess (22A, 22B) on the surface of the object respectively match with retroreflection coefficients of corresponding parts of the preset identification structure.

10. The method of claim 8, further comprising:
retrieving a recorded map data when it is determined that there is a need to return to the charging pile; and
moving, based on the map data, to an area in a preset distance range from a set position of the charging pile marked in the map data, to recognize the charging pile by acquiring the surface characteristics of the surrounding objects.

11. The method of claim 8, wherein acquiring the surface characteristics of the surrounding objects comprises:
measuring, by a laser ranging device, distances from surrounding sampling points; and determining the surface characteristics of the surrounding objects based on the measured distances; or
measuring, by a laser ranging device, reflected light intensities of surrounding sampling points; and determining the surface characteristics of the surrounding objects based on the measured reflected light intensities.

12. A device for recognizing a charging pile, comprising:
an acquisition unit (1301) configured to acquire surface characteristics of surrounding objects; and
a decision unit (1302) configured to decide an object to be the charging pile for an autonomous cleaning device when surface characteristics of the object match with a preset identification structure within an allowed error range, wherein the preset identification structure comprises at least one identification element, each identification element comprises at least one bulge and at least one recess, one of the bulge and the recess has a surface structure having a smaller retroreflection coefficient than that of a surface structure of the other one of the bulge and the recess, and an intensity of retroreflected light from the surface structure having the smaller retroreflection coefficient is not smaller than a minimum recognizable light of a recognition device of the device; the preset identification structure comprises at least one pair of surface structures of an identification element with unmatched specifications, a bulge or a recess of the identification element has a surface structure,
**characterised in that** in an identification element (2A), the retroreflection coefficient of the surface of the bulge (21A) is smaller than that of the surface of the recess (22A).

13. An autonomous cleaning device used in cooperation with the charging pile of any one of claims 1-7.

## Patentansprüche

1. Ladestation für eine autonome Reinigungsvorrichtung, umfassend:
einen Stationskörper (1), der eine Energieversorgungsschnittstelle (11) umfasst, wobei die Energieversorgungsschnittstelle (11) auf einer Seitenfläche des Stationskörpers (1) vorgesehen ist, um die autonome Reinigungsvorrichtung mit Energie zu versorgen,
eine Identifikationsstruktur (2), die an der Seitenfläche des Stationskörpers (1) angeordnet ist, um es zu ermöglichen, dass eine Position der Energieversorgungsschnittstelle (11) durch eine Erkennungsvorrichtung an der autonomen Reinigungsvorrichtung erkannt und bestimmt wird, wobei die Identifikationsstruktur (2) mindestens ein Identifikationselement (2A, 2B) umfasst und jedes Identifikationselement (2A) mindestens eine Ausbuchtung (21A) und mindestens eine Vertiefung (22A) umfasst, eine (21A) von der Ausbuchtung (21A) und der Vertiefung (22A) eine Oberflächenstruktur aufweist, die einen kleineren Rückstrahlungskoeffizienten als eine Oberflächenstruktur der anderen (22A) von der Ausbuchtung (21A) und der Vertiefung (22A) hat, und eine Intensität von rückgestrahltem Licht von der Oberflächenstruktur (21A), die den kleineren Rückstrahlungskoeffizienten hat, nicht kleiner ist als eine minimal erkennbare Lichtintensität der Erkennungsvorrichtung,
wobei die Identifikationsstruktur (2) mindestens ein Paar von Oberflächenstrukturen eines Identifikationselements (2B) mit ungleichen Spezifikationen (21B, 22B) umfasst, wobei eine Ausbuchtung (21A, 21B) oder eine Vertiefung (22A, 22B) des Identifikationselements (2A, 2B) eine Oberflächenstruktur hat,
**dadurch gekennzeichnet, dass**
bei einem Identifikationselement (2A) der Rückstrahlungskoeffizient der Oberfläche der Ausbuchtung (21A) kleiner ist als der der Oberfläche der Vertiefung (22A).

2. Ladestation nach Anspruch 1, wobei die Oberflächenstruktur der Ausbuchtung (21A) einen größeren Grauwert als die Oberflächenstruktur der Vertiefung (22A) hat.

3. Ladestation nach Anspruch 1, wobei ein Unterschied zwischen voreingestellten Spezifikationsparametern eines Paars von Oberflächenstrukturen (21A, 22A) eines Identifikationselements (2A) mit gleichen Spezifikationen nicht größer ist als ein Erkennungsfehler der Erkennungsvorrichtung und
wobei ein Unterschied zwischen voreingestellten Spezifikationsparametern eines Paars von Oberflächenstrukturen (21B, 22B) eines Identifikationselements (2B) mit ungleichen Spezifikationen größer ist als der Erkennungsfehler der Erkennungsvorrichtung.

4. Ladestation nach Anspruch 1, wobei ein voreingestellter Spezifikationsparameter jeder Ausbuchtung (21A, 21B) oder jeder Vertiefung (22A, 22B) nicht kleiner ist als ein minimal erkennbarer Abstand der Erkennungsvorrichtung.

5. Ladestation nach Anspruch 1, wobei ein Tiefenunterschied (d4) zwischen der Oberfläche einer Ausbuchtung (21B) und der Oberfläche einer Vertiefung (22B) in jedem Identifikationselement (2B) nicht kleiner ist als ein Erkennungsfehler der Erkennungsvorrichtung.

6. Ladestation nach Anspruch 1, wobei eine Spezifikation einer Bodenfläche einer Vertiefung (22B) mit einer Spezifikation einer Seitenwand der Vertiefung (22B) zusammenwirkt, so dass während der Erkennung einer beliebigen Seitenfläche der Ladestation durch die Erkennungsvorrichtung in einem voreingestellten Winkelbereich (α) die Seitenwand der Vertiefung (22B) höchstens einen Teil der Bodenfläche schützt und mindestens ein Teil der Bodenfläche der Vertiefung (22B) in einem erkennbaren Zustand ist, wobei ein voreingestellter Spezifikationsparameter des mindestens einen Teils nicht kleiner ist als ein Erkennungsfehler der Erkennungsvorrichtung und ein minimal erkennbarer Abstand der Erkennungsvorrichtung.

7. Ladestation nach Anspruch 1, wobei mehrere Identifikationselemente (2A, 2B) und die Ausbuchtung (21A, 21B) und die Vertiefung (22A, 22B) jedes Identifikationselements in einer Richtung entlang eines voreingestellten Erkennungspfads der Erkennungsvorrichtung angeordnet sind, um voreingestellten Spezifikationsparametern jeweiliger Identifikationselemente zu ermöglichen, dass sie wiederum von der Erkennungsvorrichtung erkannt werden.

8. Verfahren zum Erkennen einer Ladestation, umfassend:
Erlangen (1102) von Oberflächeneigenschaften von umgebenden Objekten,
Bestimmen (1104) eines Objekts, die Ladestation für eine autonome Reinigungsvorrichtung zu sein, wenn Oberflächeneigenschaften des Objekts mit einer voreingestellten Identifikationsstruktur innerhalb eines gestatteten Fehlerbereichs übereinstimmen, wobei die voreingestellte Identifikationsstruktur mindestens ein Identifikationselement umfasst, jedes Identifikationselement mindestens eine Ausbuchtung und mindestens eine Vertiefung umfasst, eine von der Ausbuchtung und der Vertiefung eine Oberflächenstruktur aufweist, die einen kleineren Rückstrahlungskoeffizienten als eine Oberflächenstruktur der anderen von der Ausbuchtung und der Vertiefung hat, und eine Intensität von rückgestrahltem Licht von der Oberflächenstruktur, die den kleineren Rückstrahlungskoeffizienten hat, nicht kleiner ist als eine minimal erkennbare Lichtintensität der Erkennungsvorrichtung, und wobei die voreingestellte Identifikationsstruktur mindestens ein Paar von Oberflächenstrukturen eines Identifikationselements mit ungleichen Spezifikationen aufweist, wobei eine Ausbuchtung oder eine Vertiefung des Identifikationselement eine Oberflächenstruktur aufweist, **dadurch gekennzeichnet, dass**
bei einem Identifikationselement (2A) der Rückstrahlungskoeffizient der Oberfläche der Ausbuchtung (21A) kleiner ist als der der Oberfläche der Vertiefung (22A).

9. Verfahren nach Anspruch 8, wobei das Bestimmen (1104) des Objekts, die Ladestation für eine autonome Reinigungsvorrichtung zu sein, wenn Oberflächeneigenschaften des Objekts mit der voreingestellten Identifikationsstruktur innerhalb des gestatteten Fehlerbereichs übereinstimmen, umfasst:
Identifizieren voreingestellter Spezifikationsparameter einer Ausbuchtung (21A, 21B) bzw. einer Vertiefung (22A, 22B) an der Oberfläche des Objekts, und Bestimmen, dass das Objekt mit der voreingestellten Identifikationsstruktur übereinstimmt und Bestimmen, dass das Objekt die Ladestation für die autonome Reinigungsvorrichtung ist, wenn die voreingestellten Spezifikationsparameter der Ausbuchtung (21A, 21B) und der Vertiefung (22A, 22B) an der Oberfläche des Objekts jeweils mit voreingestellten Spezifikationsparametern von entsprechenden Teilen der voreingestellten Identifikationsstruktur übereinstimmen, oder
Identifizieren von Rückstrahlungskoeffizienten einer Ausbuchtung (21A, 21B) bzw. einer Vertiefung (22A, 22B) an der Oberfläche des Objekts, und Bestimmen, dass das Objekt mit der voreingestellten Identifikationsstruktur übereinstimmt und Bestimmen, dass das Objekt die Ladestation für die autonome Reinigungsvorrichtung ist, wenn die Rückstrahlungskoeffizienten der Ausbuchtung (21A, 21B) und der Vertiefung (22A, 22B) an der Oberfläche des Objekts jeweils mit Rückstrahlungskoeffizienten von entsprechenden Teilen der voreingestellten Identifikationsstruktur übereinstimmen.

10. Verfahren nach Anspruch 8, ferner umfassend:
Abrufen von aufgezeichneten Lageplandaten, wenn bestimmt wird, dass es nicht nötig ist, zur Ladestation zurückzukehren, und
Bewegen, basierend auf den Lageplandaten, zu einer Zone in einem voreingestellten Abstandsbereich von einer eingestellten Position der Ladevorrichtung, die in den Lageplandaten markiert ist, um die Ladestation zu erkennen durch Erlangen der Oberflächeneigenschaften der umgebenden Objekte.

11. Verfahren nach Anspruch 8, wobei Erlangen der Oberflächeneigenschaften der umgebenden Objekte umfasst:
Messen mittels einer Laser-Messverfahrenvorrichtung von Abständen von umgebenden Abtastpunkten, oder
Messen mittels einer Laser-Messverfahrenvorrichtung von rückgestrahlten Lichtintensitäten, und Bestimmen der Oberflächeneigenschaften der umgebenden Objekte basierend auf den gemessenen rückgestrahlten Lichtintensitäten.

12. Vorrichtung zum Erkennen einer Ladestation, umfassend:
eine Erlangungseinheit (1301), die ausgestaltet ist, Oberflächeneigenschaften von umgebenden Objekten zu erlangen, und
eine Bestimmungseinheit (1302), die ausgestaltet ist, ein Objekt als die Ladestation für eine autonome Reinigungsvorrichtung zu bestimmen, wenn Oberflächeneigenschaften des Objekts mit einer voreingestellter Identifikationsstruktur innerhalb eines gestatteten Fehlerbereichs übereinstimmen, wobei die voreingestellte Identifikationsstruktur mindestens ein Identifikationselement umfasst, jedes Identifikationselement mindestens eine Ausbuchtung und mindestens eine Vertiefung umfasst, eine von der Ausbuchtung und der Vertiefung eine Oberflächenstruktur aufweist, die einen kleineren Rückstrahlungskoeffizienten als eine Oberflächenstruktur der anderen von der Ausbuchtung und der Vertiefung hat, und eine Intensität von rückgestrahltem Licht von der Oberflächenstruktur, die den kleineren Rückstrahlungskoeffizienten hat, nicht kleiner ist als ein minimal erkennbares Licht einer Erkennungsvorrichtung der Vorrichtung, wobei die voreingestellte Identifikationsstruktur mindestens ein Paar von Oberflächenstrukturen eines Identifikationselements mit ungleichen Spezifikationen umfasst, und wobei eine Ausbuchtung oder eine Vertiefung des Identifikationselements eine Oberflächenstruktur hat, **dadurch gekennzeichnet, dass** bei einem Identifikationselement (2A) der Rückstrahlungskoeffizient der Oberfläche der Ausbuchtung (21A) kleiner ist als der der Oberfläche der Vertiefung (22A).

13. Autonome Reinigungsvorrichtung, die in Zusammenwirkung mit der Ladestation nach einem der Ansprüche 1 - 7 verwendet wird.

## Revendications

1. Pieu de charge pour un dispositif de nettoyage autonome, comprenant :
un corps de pieu (1) comprenant une interface d'alimentation électrique (11), dans lequel l'interface d'alimentation électrique (11) est ménagée sur une surface latérale du corps de pieu (1) pour alimenter en électricité le dispositif de nettoyage autonome ;
une structure d'identification (2) agencée sur la surface latérale du corps de pieu (1) pour permettre de reconnaître et de déterminer une position de l'interface d'alimentation (11) par un dispositif de reconnaissance sur le dispositif de nettoyage autonome, dans lequel la structure d'identification (2) comprend au moins un élément d'identification (2A, 2B), et chaque élément d'identification (2A) comprend au moins un renflement (21A) et au moins une cavité (22A), un élément (21A) parmi le renflement (21A) et la cavité (22A) a une structure de surface ayant un coefficient de rétroréflexion inférieur à une structure de surface de l'autre élément (22A) parmi le renflement (21A) et la cavité (22A), et une intensité de la lumière rétroréfléchie par la structure de surface (21A) ayant le coefficient de rétroréflexion inférieur n'est pas inférieure à une intensité lumineuse reconnaissable minimum du dispositif de reconnaissance ;
dans lequel la structure d'identification (2) comprend au moins une paire de structures de surface d'un élément d'identification (2B) avec des spécifications incomparables (21B, 22B), un renflement (21A, 21B) ou une cavité (22A, 22B) de l'élément d'identification (2A, 2B) a une structure de surface, **caractérisé en ce que**
dans un élément d'identification (2A), le coefficient de rétroréflexion de la surface du renflement (21A) est inférieur à celui de la surface de la cavité (22A).

2. Pieu de charge selon la revendication 1, dans lequel la structure de surface du renflement (21A) a une valeur de gris supérieure à la structure de surface de la cavité (22A).

3. Pieu de charge selon la revendication 1, dans lequel une différence entre des paramètres de spécification préétablis d'une paire de structures de surface (21A, 22A) d'un élément d'identification (2A) avec des spécifications correspondantes n'est pas supérieure à une erreur de reconnaissance du dispositif de reconnaissance, et dans lequel
une différence entre des paramètres de spécification préétablis d'une paire de structures de surface (21B, 22B) d'un élément d'identification (2B) avec des spécifications incomparables est supérieure à l'erreur de reconnaissance du dispositif de reconnaissance.

4. Pieu de charge selon la revendication 1, dans lequel un paramètre de spécification préétabli de chaque renflement (21A, 21B) ou de chaque cavité (22A, 22B) n'est pas inférieur à une distance reconnaissable minimum du dispositif de reconnaissance.

5. Pieu de charge selon la revendication 1, dans lequel une différence de profondeur (d4) entre la surface d'un renflement (21B) et la surface d'une cavité (22B) dans chaque élément d'identification (2B) n'est pas inférieure à une erreur de reconnaissance du dispositif de reconnaissance.

6. Pieu de charge selon la revendication 1, dans lequel une spécification d'une surface inférieure d'une cavité (22B) coopère avec une spécification d'une paroi latérale de la cavité (22B) de sorte que, pendant une reconnaissance de toute surface latérale du pieu de charge par le dispositif de reconnaissance dans une gamme d'angle préétablie (a), la paroi latérale de la cavité (22B) protège au plus une partie de la surface inférieure et au moins une partie de la surface inférieure de la cavité (22B) est dans un état reconnaissable, dans lequel un paramètre de spécification préétabli de ladite au moins une partie n'est pas inférieur à une erreur de reconnaissance du dispositif de reconnaissance et à une distance reconnaissable minimum du dispositif de reconnaissance.

7. Pieu de charge selon la revendication 1, dans lequel de multiples éléments d'identification (2A, 2B) et le renflement (21A, 21B) et la cavité (22A, 22B) de chaque élément d'identification sont agencés dans une direction le long d'un chemin de reconnaissance préétabli du dispositif de reconnaissance, pour permettre au dispositif de reconnaissance de reconnaitre à son tour des paramètres de spécification préétablis d'éléments d'identification respectifs.

8. Procédé de reconnaissance d'un pieu de charge, comprenant :
l'acquisition (1102) de caractéristiques de surface d'objets environnants ;
la décision (1104) qu'un objet soit le pieu de charge pour un dispositif de nettoyage autonome quand des caractéristiques de surface de l'objet correspondent à une structure d'identification préétablie dans une gamme d'erreur autorisée, dans lequel la structure d'identification préétablie comprend au moins un élément d'identification, chaque élément d'identification comprend au moins un renflement et au moins une cavité, un élément parmi le renflement et la cavité a une structure de surface ayant une coefficient de rétroréflexion inférieur à une structure de surface de l'autre élément parmi le renflement et la cavité, et une intensité de lumière rétroréfléchie par la structure de surface ayant le coefficient de rétroréflexion inférieur n'est pas inférieure à une intensité lumineuse reconnaissable minimum du dispositif de reconnaissance, et dans lequel la structure d'identification préétablie comprend au moins une paire de structures de surface d'un élément d'identification avec des spécifications incomparables, un renflement ou une cavité de l'élément d'identification a une structure de surface,
**caractérisé en ce que**
dans un élément d'identification (2A), le coefficient de rétroréflexion de la surface du renflement (21A) est inférieur à celui de la surface de la cavité (22A).

9. Procédé selon la revendication 8, dans lequel la décision (1104) de quel objet doit être le pieu de charge pour un dispositif de nettoyage autonome quand des caractéristiques de surface de l'objet correspondent à la structure d'identification préétablie dans la plage d'erreur autorisée, comprend :
l'identification, respectivement, des paramètres de spécification préétablis d'un renflement (21A, 21B) et d'une cavité (22A, 22B) sur la surface de l'objet ; et la détermination que l'objet correspond à la structure d'identification préétablie et la décision que l'objet soit le pieu de charge pour le dispositif de nettoyage autonome quand les paramètres de spécification préétablis du renflement (21A, 21B) et de la cavité (22A, 22B) sur la surface de l'objet correspondent respectivement aux paramètres de spécification préétablis des parties correspondantes de la structure d'identification préétablie ; ou
l'identification, respectivement, de coefficients de rétroréflexion d'un renflement (21A, 21B) et d'une cavité (22A, 22B) sur la surface de l'objet ; et la détermination que l'objet correspond à la structure d'identification préétablie et la décision que l'objet soit le pieu de charge pour le dispositif de nettoyage autonome quand les coefficients de rétroréflexion du renflement (21A, 21B) et de la cavité (22A, 22B) sur la surface de l'objet correspondent respectivement aux coefficients de rétroréflexion de pièces correspondantes de la structure d'identification préétablie.

10. Procédé selon la revendication 8, comprenant en outre :
la récupération de données de cartographie enregistrées quand il est déterminé qu'il est nécessaire de revenir au pieu de charge ; et
le déplacement, sur la base des données de cartographie, vers une zone dans une plage de distances préétablie depuis une position établie du pieu de charge marquée dans les données de cartographie, pour reconnaître le pieu de charge en acquérant les caractéristiques de surface des objets environnants.

11. Procédé selon la revendication 8, dans lequel l'acquisition des caractéristiques de surface des objets environnants comprend :
la mesure, par un dispositif de télémétrie laser, de distances depuis des points d'échantillonnage environnants ; et la détermination des caractéristiques de surface des objets environnants sur la base des distances mesurées ; ou
la mesure, par un dispositif de télémétrie laser, d'intensités lumineuses réfléchies de points d'échantillonnage environnants ; et la détermination des caractéristiques de surface des objets environnants sur la base des intensités lumineuses réfléchies mesurées.

12. Dispositif de reconnaissance d'un pieu de charge, comprenant :
une unité d'acquisition (1301) configurée pour acquérir des caractéristiques de surface des objets environnants ; et
une unité de décision (1302) configurée pour décider qu'un objet soit le pieu de charge pour un dispositif de nettoyage autonome, lorsque des caractéristiques de surface de l'objet correspondent à une structure d'identification préétablie dans une plage d'erreur autorisée, dans lequel la structure d'identification préétablie comprend au moins un élément d'identification, chaque élément d'identification comprend au moins un renflement et au moins une cavité, un élément parmi le renflement et la cavité a une structure de surface ayant un coefficient de rétroréflexion inférieur à celui d'une structure de surface de l'autre élément parmi le renflement et la cavité, et une intensité de lumière rétroréfléchie par la structure de surface ayant le coefficient de rétroréflexion inférieur n'est pas inférieure à une lumière reconnaissable minimum d'un dispositif de reconnaissance du dispositif ; la structure d'identification préétablie comprend au moins une paire de structures de surface d'un élément d'identification avec des spécifications incomparables, un renflement ou une cavité de l'élément d'identification a une structure de surface, **caractérisé en ce que**
dans un élément d'identification (2A), le coefficient de rétroréflexion de la surface du renflement (21A) est inférieur à celui de la surface de la cavité (22A).

13. Dispositif de nettoyage autonome utilisé en coopération avec le pieu de charge selon l'une quelconque des revendications 1 à 7.
